# EUROPÄISCHE PATENTANMELDUNG

(11) **EP 0 633 642 A1**
(43) Veröffentlichungstag der Anmeldung: **11.01.1995**
(21) Anmeldenummer: 94107743.0
(22) Anmeldetag: 19.05.1994
(51) Int. Cl.: H02J 13/00

(54) **Anordnung für Funkrundsteuerempfänger**

(30) Priorität: 06.07.1993 DE 4323319
(71) Anmelder: DeTeWe FUNKWERK KOPENICK GmbH, D-12557 Berlin (DE)
(72) Erfinder: Drescher, Jürgen, D-12557 Berlin (DE)

(57) **Zusammenfassung**

Für die Anordnung von Funkrundsteuerempfängern wird vorgeschlagen, den Rundsteuerempfänger in ein Empfangsteil und ein Auswertteil zu unterteilen, wobei im Empfangsteil die Antenne, der Funkempfänger und ein universeller Datenausgang zusammengefaßt sind.

## Beschreibung

Die Erfindung bezieht sich auf eine Anordnung für Funkrundsteuerempfänger.

Es ist bekannt, über Langwellensender eine Normalfrequenz und eine Zeitinformation auszusenden, um beispielsweise in Elektrizitäts-Versorgungsunternehmen (EVU) Schaltuhren zu synchronisieren, in Kommunen Ampelanlagen zu steuern usw. (telekom praxis, Heft 1, 1993, Seiten 25 bis 37).

Da Langwellen-Frequenzen in Gebäude eindringen, sind einfache Antennenformen möglich und preiswerte Empfänger herstellbar. Weil die Bodenwelle im Langwellen-Frequenzbereich zuverlässig in Entfernungen bis ca. 500 km empfangen werden kann, bietet sich der Langwellen-Frequenzbereich für eine Funkrundsteuerung an. Die bekannte und drahtgebundene Rundsteuertechnik ist eine Einwegübertragung der Art, daß z. B. von einem EVU eine Zu- oder Abschaltung von Verbrauchern gesteuert wird. Für die Funkübertragung derartiger Steuersignale ist ein schmalbandiger Funkkanal geeignet.

Der Erfindung lag die Aufgabe zugrunde, einen Funkrundsteuerempfänger für den Langwellen-Frequenzbereich zu entwickeln.

Diese Aufgabe ist durch die Erfindung gelöst, wie sie im Kennzeichnungsteil des ersten Patentanspruches dargelegt ist. Weitere vorteilhafte Maßnahmen sind Gegenstand der Unteransprüche.

Anhand eines Blockschaltbildes wird der Aufbau eines Funkrundsteuerempfängers nach der Erfindung nachfolgend näher beschrieben.

Der Funkrundsteuerempfänger besteht prinzipiell aus einem Empfangsteil E und einem Auswertteil A.

Das Empfangsteil E enthält den Funkempfänger FE einschließlich der Antenne AN, einen Verstärker VE und einen universellen Datenausgang DA mit hohem Ausgangspegel.

Das Auswertteil A umfaßt einen Prozessor PR mit Mikrorechner, die Datensenke DS und die Stromversorgung SV. In nicht näher dargestellter Art steuert das Auswertteil A nachgeschaltete Einrichtungen und/oder Geräte.

Das Empfangsteil E und das Auswertteil A können räumlich getrennt voneinander angeordnet werden. Dabei ist auch die Möglichkeit gegeben, einem Empfangsteil E mehrere Auswertteile A zuzuordnen.

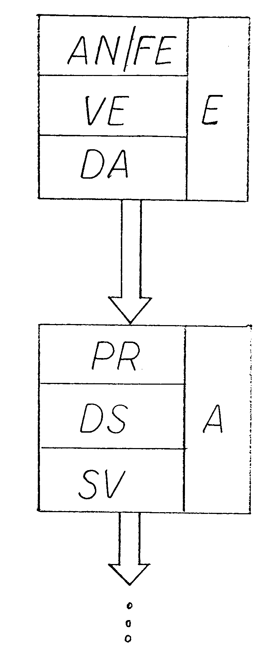

## Patentansprüche

1. Anordnung für Funkrundsteuerempfänger, gekennzeichnet durch die Unterteilung des Rundsteuerempfängers in einen Empfangsteil (E) und einen Auswertteil (A).

2. Anordnung nach Anspruch 1, gekennzeichnet durch das Zusammenfassen von Antenne (AN), Funkempfänger (FE), Verstärker (VE) und universellem Datenausgang (DA) im Empfangsteil (E).

3. Anordnung nach Anspruch 1, gekennzeichnet durch das Zusammenfassen von Prozessor (PR), Datensenke (DS) und Stromversorgung (SV) im Auswertteil (A).

4. Anordnung nach Anspruch 1, gekennzeichnet durch die räumliche Trennung von Empfangsteil (E) und Auswertteil (A).

5. Anordnung nach Anspruch 2, gekennzeichnet durch einen Datenausgang (DA) mit hohem Ausgangspegel.

6. Anordnung nach Anspruch 1 und 4, gekennzeichnet durch die Zuordnung mehrerer Auswertteile (A) zu einem Empfangsteil (E).
